# EUROPÄISCHE PATENTANMELDUNG

(11) **EP 3 530 612 A1**
(43) Veröffentlichungstag der Anmeldung: **28.08.2019**
(21) Anmeldenummer: 18020076.8
(22) Anmeldetag: 22.02.2018
(51) Int. Cl.: C01B 3/38, C01B 3/48

(54) **VERFAHREN UND ANLAGE ZUR BEREITSTELLUNG EINES ÜBERWIEGEND ODER AUSSCHLIESSLICH WASSERSTOFF ENTHALTENDEN GASPRODUKTS**

(71) Anmelder: Linde Aktiengesellschaft, 80331 München (DE)
(72) Erfinder: Mabrouk, Rachid, 81477 München (DE); Tardy, Alain, 81377 München (DE)
(74) Vertreter: Fischer, Werner

(57) **Zusammenfassung**

Die vorliegende Erfindung betrifft ein Verfahren (10-60) zur Herstellung eines Gasprodukts (I), das überwiegend oder ausschließlich Wasserstoff enthält, wobei ein erstes Einsatzgemisch (E), das zumindest einen Kohlenwasserstoff und Wasser enthält, gebildet wird, wobei das erste Einsatzgemisch (E) einer Dampfreformierung (2) unterworfen wird, wobei mittels der Dampfreformierung (2) ein erstes Produktgemisch (F), das zumindest Wasser, Kohlendioxid, Kohlenmonoxid, den zumindest einen Kohlenwasserstoff und Wasserstoff enthält, gebildet wird, wobei unter Verwendung zumindest eines Teils des ersten Produktgemischs (F) ein zweites Einsatzgemisch (G), das zumindest Wasser, Kohlendioxid, Kohlenmonoxid, den zumindest einen Kohlenwasserstoff und Wasserstoff enthält, gebildet wird, wobei das zweite Einsatzgemisch (G) einer Wassergas-Shift (3) unterworfen wird, wobei mittels der Wassergas-Shift (3) ein zweites Produktgemisch (H), das zumindest Wasser, Kohlendioxid, Kohlenmonoxid, den zumindest einen Kohlenwasserstoff und Wasserstoff enthält und gegenüber dem ersten Produktgemisch (F) an Kohlendioxid und Wasserstoff angereichert und an Kohlenmonoxid und Wasser abgereichert ist, gebildet wird, wobei zumindest ein Teil des zweiten Produktgemischs (H) nach zumindest teilweiser Entfernung von Wasser einer Wasserstoffabtrennung (4) unterworfen wird, und wobei mittels der Wasserstoffabtrennung (4) das Gasprodukt (I) und ein Restgemisch (K), das zumindest Kohlendioxid, Kohlenmonoxid, den zumindest einen Kohlenwasserstoff und Wasserstoff enthält, gebildet werden. Es ist vorgesehen, dass das zweite Einsatzgemisch (G) unter Verwendung eines Teils (L) des Restgemischs gebildet wird. Eine entsprechende Anlage ist ebenfalls Gegenstand der vorliegenden Erfindung.

## Beschreibung

Die vorliegende Erfindung betrifft ein Verfahren und eine Anlage zur Herstellung eines überwiegend oder ausschließlich Wasserstoff enthaltenden Gasprodukts gemäß den jeweiligen Oberbegriffen der unabhängigen Patentansprüche.

### Stand der Technik

Die Herstellung von Wasserstoff als Teil von sogenanntem Synthesegas durch Dampfreformierung (engl. Steam Methane Reforming, SMR) ist bekannt und in einschlägigen Lehrbüchern, beispielsweise bei H.-W. Häring (Hrsg.), Industrial Gases Processing, Wiley-VCH, 2006, insbesondere Abschnitt 5.2.2.1, "Generation of Synthesis Gas by Steam Reforming", beschrieben.

Bei bekannten Verfahren der Dampfreformierung werden Kohlenwasserstoffe, insbesondere Methan bzw. ein Methan enthaltendes Gasgemisch wie Erdgas, mit Wasserdampf vermischt und vorgeheizt. Je nach dem Gehalt an ggf. vorhandenen höheren Kohlenwasserstoffen erfolgt dies auf ein Temperaturniveau von 450 bis 630 °C. Die Dampfreformierung selbst wird in Reaktoren durchgeführt, die mittels Brennern befeuert werden. Es sind auch Verfahrensvarianten bekannt, in denen zusätzlich zu befeuerten Reaktoren mittels Abwärme betriebene Reaktoren zum Einsatz kommen. Die Abwärme stammt hierbei typischerweise aus einem Produktgemisch, das einem weiterhin vorhandenen befeuerten Dampfreformierungsreaktor, jedoch auch beispielsweise einem Reaktor zur partiellen Oxidation (POX) oder einem Reaktor zur autothermen Reformierung (ATR) entnommen wird. Solche Reaktoren werden auch als gasbeheizte Reformer (engl. Gas Heated Reformers, GHR) bezeichnet. Ein Verfahren, bei dem ein in der erläuterten Weise mit Abwärme beheizter und ein mittels Brennern befeuerter Dampfreformierungsreaktor parallel zum Einsatz kommen, ist beispielsweise aus der US 5,300,275 A bekannt.

Der Dampfreformierung zugeführte Kohlenwasserstoffe bzw. entsprechende Gasgemische müssen typischerweise im Wesentlichen frei von Schwefelverbindungen sein, da Schwefel als Katalysatorgift wirkt. Schwefel liegt in Erdgas insbesondere in Form von Schwefelwasserstoff und organischen Schwefelverbindungen vor. Wird Erdgas oder ein entsprechendes Gasgemisch in der Dampfreformierung eingesetzt, muss dieses daher einer Entschwefelung unterworfen werden. Die Entschwefelung kann beispielsweise durch die allgemein bekannte Hydrodesulfurierung (HDS) mit nachgeschaltetem Adsorberbett und entsprechende Varianten hiervon erfolgen.

Die Aufbereitung von Erdgas ist beispielsweise im Artikel "Natural Gas" in Ullmann's Encyclopedia of Industrial Chemistry, Onlineveröffentlichung 15. Juli 2006, DOI: 10.1002/14356007.a17_073.pub2, beschrieben. Bezüglich der Entschwefelung sei insbesondere auf die Kapitel 2.4, "Removal of Carbon Dioxide and Sulfur Components", und 2.7, "Recovery of Sulfur", verwiesen. Entsprechende Verfahren können auch für andere schwefelhaltige Gasgemische eingesetzt werden.

Die Dampfreformierung wird typischerweise auf einem Temperaturniveau oberhalb von 750 °C durchgeführt. Ein Gasgemisch, das bei der Dampfreformierung dem oder den verwendeten Reformierungsreaktoren entnommen wird, liegt daher typischerweise bei 750 bis 930 °C vor. Dieses sogenannte Syntheserohgas enthält Kohlenmonoxid, Wasserstoff, Kohlendioxid, zumindest einen Kohlenwasserstoff (im Fall von Erdgas als Einsatz insbesondere Methan, ansonsten andere Kohlenwasserstoffe) und Wasser sowie Inertgase wie Stickstoff und Edelgase, die beispielsweise aus eingesetztem Erdgas stammen können.

Um die Wasserstoffausbeute zu erhöhen, kann ein entsprechendes Syntheserohgas der bekannten Wassergas-Shift unterworfen werden, in der Kohlenmonoxid mit Wasser zu Kohlendioxid und Wasserstoff umgesetzt wird. Die Wassergas-Shift und ihre Ausgestaltungen (beispielsweise umfassend eine Hochtemperatur- und eine Niedertemperatur-Shift) ist ebenfalls allgemein bekannt.

Das in der Wassergas-Shift erhaltene Gasgemisch wird zur Entfernung zumindest eines Teils des enthaltenen Wassers einer Abkühlung unterworfen, wodurch Wasser aus dem Gasgemisch auskondensiert. Zur weiteren Bearbeitung kann insbesondere eine Druckwechseladsorption (engl. Pressure Swing Adsorption, PSA) zum Einsatz kommen, wie bei Häring (s.o.) insbesondere in Abschnitt 5.2.3.4, "Pressure Swing Adsorption (PSA)" beschrieben. In kommerziell eingesetzten Verfahren werden dabei typischerweise 70 bis 85% des in einem entsprechenden Gasgemisch enthaltenen Wasserstoffs abgetrennt. Der abgetrennte Wasserstoff stellt ein typisches Produkt eines entsprechenden Verfahrens dar.

In der Druckwechseladsorption, aber auch in entsprechenden vergleichbaren Verfahren, beispielsweise Membranverfahren, wird ferner ein weiteres Gasgemisch erhalten, das in der Fachwelt auch als sogenanntes Tailgas bezeichnet wird. Dieses enthält neben den schwereren Komponenten auch in der Druckwechseladsorption oder in einem anderen entsprechenden Verfahren nicht abgetrennten Wasserstoff. Ein entsprechendes Gasgemisch, hier auch als Restgasgemisch bezeichnet, wird in herkömmlichen Verfahren typischerweise zur Beheizung des oder der Reformierreaktoren verfeuert.

Verfahren der erläuterten Art sind beispielsweise auch aus der US 8,449,633 B2, der US 8,747,806 B2 und der US 7,731,935 B2 bekannt.

Die vorliegende Erfindung stellt sich die Aufgabe, entsprechende Verfahren und Vorrichtungen zur Bereitstellung überwiegend oder ausschließlich Wasserstoff enthaltender Gasprodukte zu verbessern.

### Offenbarung der Erfindung

Vor diesem Hintergrund schlägt die vorliegende Erfindung ein Verfahren und eine Anlage mit den jeweiligen Merkmalen der unabhängigen Patentansprüche vor. Bevorzugte Ausgestaltungen sind jeweils Gegenstand der abhängigen Patentansprüche sowie der nachfolgenden Beschreibung.

Vor der Erläuterung der Vorteile der vorliegenden Erfindung werden nachfolgend einige bei der Beschreibung der Erfindung verwendete Begriffe näher definiert.

Gasgemische können im hier verwendeten Sprachgebrauch reich oder arm an einer oder mehreren Komponenten sein, wobei der Begriff "reich" für einen Gehalt von wenigstens 80% und der Begriff "arm" für einen Gehalt von höchstens 20%, auf molarer Gewichts- oder Volumenbasis stehen kann. Der Begriff "überwiegend" kann hier insbesondere dem Begriff "reich" entsprechen.

Ein Gasgemisch kann im hier verwendeten Sprachgebrauch ferner angereichert oder abgereichert an einer oder mehreren Komponenten sein, wobei sich diese Begriffe auf einen entsprechenden Gehalt dieser Komponente(n) in einem anderen Gasgemisch beziehen, unter Verwendung dessen das betrachtete Gasgemisch gebildet wurde. Das betrachtete Gasgemisch ist dabei "angereichert", wenn es gegenüber dem zu seiner Bildung verwendeten Gasgemisch einen höheren Gehalt der bezeichneten Komponente(n) aufweist, und "abgereichert", wenn der Gehalt dieser Komponente(n) niedriger ist.

Ist hier davon die Rede, dass ein Gasgemisch unter Verwendung eines anderen Gasgemischs "gebildet" wird, sei darunter verstanden, dass das betrachtete Gasgemisch zumindest einige der in dem anderen Gasgemisch enthaltenen oder in diesem gebildete Komponenten aufweist. Ein Bilden eines Gasgemischs aus einem anderen kann beispielsweise ein Abzweigen eines Teils des Gasgemischs, ein Zuspeisen einer oder mehrerer weiterer Komponenten oder Gasgemischs, ein chemisches oder physikalisches Umsetzen zumindest einiger Komponenten sowie ein Erwärmen, Abkühlen, Verdampfen, Kondensieren usw. umfassen. Ein "Bilden" eines Gasgemischs aus einem anderen Gasgemisch kann aber auch lediglich die Bereitstellung des anderen Gasgemischs oder eines Teils hiervon in geeigneter Form, beispielsweise in einem Behälter oder einer Leitung, umfassen.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen. Jedoch bewegen sich derartige Drücke und Temperaturen typischerweise in bestimmten Bereichen, die beispielsweise ± 1%, 5%, 10%, 20% oder 25% um einen Mittelwert liegen. Entsprechende Druckniveaus und Temperaturniveaus können in disjunkten Bereichen liegen oder in Bereichen, die einander überlappen. Dasselbe Druckniveau kann beispielsweise auch noch vorliegen, wenn es zu unvermeidlichen Druckverlusten kommt. Entsprechendes gilt für Temperaturniveaus. Bei dem hier in bar angegebenen Druckniveaus handelt es sich um Absolutdrücke.

### Vorteile der Erfindung

Die vorliegende Erfindung beruht insbesondere auf der Erkenntnis, dass anstelle einer ausschließlichen thermischen Nutzung des in der Druckwechseladsorption bzw. einer entsprechenden Wasserstoffabtrennung anfallenden Restgemischs bzw. Tailgases, d.h. dessen Verfeuerung, eine stoffliche Nutzung des Restgemischs bzw. Tailgases besonders vorteilhaft ist.

Die Erfindung schlägt vor diesem Hintergrund ein Verfahren zur Herstellung eines Gasprodukts, das überwiegend oder ausschließlich Wasserstoff enthält, vor, wobei ein erstes Einsatzgemisch, das zumindest einen Kohlenwasserstoff und Wasser enthält, gebildet wird, und wobei das erste Einsatzgemisch einer Dampfreformierung unterworfen wird, wobei mittels der Dampfreformierung ein erstes Produktgemisch, das zumindest Wasser, Kohlendioxid, Kohlenmonoxid, den zumindest einen Kohlenwasserstoff und Wasserstoff enthält, gebildet wird. Wie erwähnt, wird bei der Dampfreformierung insbesondere Methan als Einsatz verwendet, so dass es sich bei dem zumindest einen Kohlenwasserstoff in dem ersten Einsatzgemisch insbesondere um Methan handeln kann. Es können jedoch auch höhere Kohlenwasserstoffe eingesetzt werden, die ebenfalls insbesondere aus Erdgas, aber auch aus anderen Quellen stammen können. Das erste Produktgemisch enthält ebenfalls den zumindest einen Kohlenwasserstoff, insbesondere aber aufgrund der teilweisen Umsetzung in der Dampfreformierung in geringerer Menge. Sind in dem ersten Einsatzgemisch mehrere Kohlenwasserstoffe enthalten, enthält das erste Produktgemisch die Kohlenwasserstoffe in ggf. abweichenden Anteilen. Ist vereinfacht von "Methan" die Rede, seien hierunter auch andere geeignete Kohlenwasserstoffe verstanden.

Im Rahmen der vorliegenden Erfindung wird ferner unter Verwendung zumindest eines Teils des ersten Produktgemischs ein zweites Einsatzgemisch, das zumindest Wasser, Kohlendioxid, Kohlenmonoxid, den zumindest einen Kohlenwasserstoff und Wasserstoff enthält, gebildet wird, wobei das zweite Einsatzgemisch einer Wassergas-Shift unterworfen wird, wobei mittels der Wassergas-Shift ein zweites Produktgemisch, das zumindest Wasser, Kohlendioxid, Kohlenmonoxid, den zumindest einen Kohlenwasserstoff und Wasserstoff enthält und gegenüber dem ersten Produktgemisch an Kohlendioxid und Wasserstoff angereichert und an Kohlenmonoxid und Wasser abgereichert ist, gebildet wird, wobei zumindest ein Teil des zweiten Produktgemischs nach zumindest teilweiser Entfernung von Wasser einer Wasserstoffabtrennung unterworfen wird, und wobei mittels der Wasserstoffentfernung das Gasprodukt und ein Restgemisch, das zumindest Kohlendioxid, Kohlenmonoxid, den zumindest einen Kohlenwasserstoff und Wasserstoff enthält, gebildet werden. Als Wasserstoffabtrennung kann insbesondere eine Druckwechseladsorption verwendet werden, jedoch auch beispielsweise ein Membranverfahren, das selektiv Wasserstoff passieren lässt. Typisch für eine entsprechende Wasserstoffabtrennung ist, dass in dieser ein großer Teil, aber nicht sämtlicher Wasserstoff abgetrennt wird.

Erfindungsgemäß wird das zweite Einsatzgemisch unter Verwendung eines Teils des Restgemischs gebildet bzw. wird, mit anderen Worten, das Restgemisch im Rahmen der vorliegenden Erfindung teilweise zur Wassergas-Shift zurückgeführt. Die Rückführung kann dabei insbesondere eine (Rück-)Verdichtung umfassen, um das Restgas, das der Wasserstoffabtrennung typischerweise auf einem geringeren Druckniveau entnommen wird, wieder auf das Druckniveau der Wassergas-Shift zu bringen.

Die Rückführung in die Wassergas-Shift ist einfach und ohne großen baulichen Aufwand auch in bestehenden Anlagen nachrüstbar. Sie führt insbesondere zu einer verbesserten Verfahrenseffizienz, weil durch die Rückführung der in der Dampfreformierung und in der Wassergas-Shift gebildete und in der Wasserstoffabtrennung nicht abgetrennte Wasserstoff nicht verfeuert werden muss sondern in das Verfahren zurückgeführt werden kann. Aufgrund dieser Verbesserungen ist es im Rahmen der vorliegenden Erfindung möglich, die Kohlendioxidemissionen bei der Herstellung von Wasserstoff aus fossilen Energiequellen wie Erdgas deutlich zu reduzieren.

Im Rahmen der vorliegenden Erfindung kann der der Teil des Restgemischs, der bei der Bildung des zweiten Einsatzgemischs verwendet, also rückgeführt wird, insbesondere einen Mengenanteil von 10% bis 80%, vorzugsweise 20% bis 40% des Restgemischs umfassen. Dieser Anteil, d.h. eine nicht vollständige Rückführung, ist von besonderem Vorteil, weil auf diese Weise auf eine Entfernung von Kohlendioxid aus dem rückgeführten Anteil verzichtet werden kann. Wie erwähnt, wird im Rahmen der vorliegenden Erfindung mittels der Wassergas-Shift das zweites Produktgemisch mit einem gegenüber dem ersten Produktgemisch erhöhten Kohlendioxidgehalt gebildet. Das Kohlendioxid geht in der Wasserstoffabtrennung überwiegend oder ausschließlich in das Restgemisch über. Würde nun wiederum das gesamte Restgemisch rückgeführt, würde ein Kreislauf aufgebaut, in dem sich der Gehalt an Kohlendioxid kontinuierlich anreichert, weil sich das Kohlendioxid in sämtlichen beteiligten Verfahrensschritten nicht nennenswert umgesetzt wird. Entsprechendes gilt auch für andere sich inert verhaltende Komponenten. Durch die unvollständige Rückführung können entsprechende Komponenten aus dem Verfahren ausgeschleust werden. Wird beispielsweise eine Abreicherung an Kohlendioxid vorgenommen, beispielsweise mittels eines Wäscheverfahrens, kann auch ein größerer Anteil oder das vollständige Restgemisch rückgeführt werden.

Ein nicht bei der Bildung des zweiten Einsatzgemischs verwendeter, also rückgeführter Anteil des Restgemischs kann im Rahmen der vorliegenden Erfindung insbesondere als Brenngas in der Dampfreformierung eingesetzt, also, wie in herkömmlichen Verfahren üblich, thermisch genutzt werden.

Besonders vorteilhaft ist es, wenn die Bereitstellung des ersten Einsatzgemischs eine Entschwefelung umfasst, der schwefelhaltiges Erdgas zugeführt wird, und in diesem Fall ein weiterer Anteil des Restgemischs ebenfalls der Entschwefelung zugeführt wird. Eine entsprechende Rückführung hat den besonderen Vorteil, dass hiermit der normalerweise in der Entschwefelung eingesetzte reine Wasserstoff durch den in dem Restgas enthaltenden Wasserstoff ersetzt werden kann. Weil für die Rückführung in die Wassergas-Shift bereits ein Verdichter verwendet wird (wobei unter "Verdichtern" hier auch Vorrichtungen wie Ionenverdichter, Gas- oder Dampfejektoren und dergleichen verstanden werden), kann auf einen separaten Verdichter, der ansonsten für den der Entschwefelung zuzuführenden Wasserstoff erforderlich ist, verzichtet werden.

Gemäß einer Ausgestaltung der vorliegenden Erfindung umfasst die Bildung des ersten Einsatzgemischs eine Zugabe von Dampf, wobei bei der die Bildung des zweiten Einsatzgemischs keine separate Dampfzugabe erfolgt. Diese Ausgestaltung erweist sich als apparativ besonders einfach.

Alternativ dazu kann in einer besonders vorteilhaften Ausgestaltung der Erfindung bei der Bildung des ersten Einsatzgemischs eine Dampfzugabe und bei der Bildung des zweiten Einsatzgemischs eine weitere, separate Dampfzugabe erfolgen. Dies kann insbesondere unter Verwendung einer gemeinsamen Dampfquelle erfolgen. Die Dampfzugabe bei der Bildung des ersten Einsatzgemischs kann in diesem Fall entsprechend reduziert werden.

In der soeben erläuterten Ausgestaltung der vorliegenden Erfindung ist eine verbesserte Entkopplung der Wassergas-Shift von der Dampfreformierung möglich, wodurch beide bei optimierten Bedingungen betrieben werden können. Ferner wird hierdurch eine Reduzierung in der Feuerungslast möglich, die einen reduzierten Verbrauch an fossilen Brennstoffen bewirkt. Schließlich ist in dieser Ausgestaltung auch eine verbesserte Selektivität in Richtung Wasserstoff erzielbar.

Gemäß einer besonders bevorzugten Ausgestaltung der vorliegenden Erfindung wird zusätzlich zu der regulären, befeuerten Dampfreformierung eine gasbeheizte Reformierung durchgeführt wird wie sie eingangs erläutert wurde. Diese wird unter Verwendung zumindest eines Teils des ersten Produktgemischs beheizt.

Im Rahmen der vorliegenden Erfindung kann ohne eine gasbeheizte Reformierung in einem Beispielfall eine Reduzierung des Erdgasverbrauchs um 1,3%, eine Verbesserung der thermischen Effizienz um 0,55% und eine Reduzierung des Kohlendioxid-Footprints in der Dampfreformierung um 1,56% erzielt werden. Durch die Erfindung ergibt sich, wie erwähnt, insbesondere eine vorteilhafte Nachrüstmöglichkeit bei bestehenden Anlagen. Ferner werden aufgrund der größeren Flexibilität in der Verwendung des Restgases neue Möglichkeiten zur weiteren Optimierung geschaffen.

Wird außerdem eine gasbeheizte Reformierung eingesetzt, in der ein nicht befeuerter Reformierungsreaktor mit Abwärme von Synthesegas eines befeuerten Reformierungsreaktors beheizt wird (daher auch als "synthesegasbeheizter" Reaktor bezeichnet), kann in einem Beispielfall eine Reduzierung des Erdgasverbrauchs um 5,84%, eine Verbesserung der thermischen Effizienz um 5,6% und eine Reduzierung des Kohlendioxid-Footprints in der Dampfreformierung um 6,2% erzielt werden.

Werte, die in Verfahren gemäß Ausführungsformen der vorliegenden Erfindung erzielt werden können, sind in der nachfolgenden Tabelle zusammengefasst, wobei Spalte 1 ("Fall 1") Werte gemäß dem Stand der Technik, Spalte 2 ("Fall 2") die Werte bei Rückführung ohne synthesegasbeheizten Reaktor und Spalte 3 ("Fall 3") die Werte mit synthesegasbeheiztem Reaktor angibt. Zeile 1 gibt die (identische) Menge an gebildetem Wasserstoffprodukt (15.000 Normkubikmeter pro Stunde), Zeile 2 den jeweils auf den Fall 1 indizierten Erdgasverbrauch und Zeile 3 die jeweils auf Fall 1 identifizierte thermische Effizienz angeben.

| | **Fall 1** | **Fall 2** | **Fall 3** |
|---|---|---|---|
| Wasserstoffprodukt [15 kNm³/h] | 15 | 15 | 15 |
| Erdgasverbrauch [Index-%] | 100 | 94,9 | 94,1 |
| Thermische Effizienz [Index-%] | 100 | 104,5 | 105,6 |

Im Rahmen der vorliegenden Erfindung wird die Wasserstoffabtrennung, insbesondere im Fall einer Druckwechseladsorption, mit einem Eingangsdruckniveau, im Fall einer Druckwechseladsorption einem Adsorptionsdruckniveau, von 10 bis 28 bar, insbesondere von 15 bis 25 bar und mit einem Ausgangsdruckniveau, im Fall einer Druckwechseladsorption einem Desorptionsdruckniveau, von 1,2 bis 2,0 bar, insbesondere von 1,2 bis 1,8 bar durchgeführt, wobei das Gasprodukt auf dem Eingangsdruckniveau und das Restgemisch auf dem Ausgangsdruckniveau bereitgestellt werden.

Zumindest die Wassergas-Shift wird dabei vorteilhafterweise auf einem Betriebsdruckniveau, das oberhalb des Ausgangsdruckniveaus liegt, durchgeführt. Dies bedeutet, dass der Teil des Restgemischs, der bei der Bildung des zweiten Einsatzgemischs verwendet wird, auf dieses Druckniveau verdichtet wird. Hierzu können Verdichter eingesetzt werden, die als klassische Verdichter, beispielsweise Kolben- oder Turboverdichter, eingesetzt werden, aber auch andere Vorrichtungen wie Ionenverdichter, Gas- oder Dampfejektoren.

Im Rahmen der vorliegenden Erfindung kann das Betriebsdruckniveau der Wassergas-Shift bei 10 bis 30 bar, insbesondere bei 15 bis 25 bar liegen. Die Dampfreformierung wird in diesem Fall vorteilhafterweise auf einem Druckniveau durchgeführt, das zumindest bei dem Betriebsdruckniveau der Wassergas-Shift liegt.

Die vorliegende Erfindung erstreckt sich auch auf eine Anlage zur Herstellung eines Gasprodukts, das überwiegend oder ausschließlich Wasserstoff enthält, wobei die Anlage Mittel, die dafür eingerichtet sind, ein erstes Einsatzgemisch, das zumindest einen Kohlenwasserstoff und Wasser enthält, zu bilden, Mittel, die dafür eingerichtet sind, das erste Einsatzgemisch einer Dampfreformierung zu unterwerfen und mittels der Dampfreformierung ein erstes Produktgemisch, das zumindest Wasser, Kohlendioxid, Kohlenmonoxid, den zumindest einen Kohlenwasserstoff und Wasserstoff enthält, zu bilden, Mittel, die dafür eingerichtet sind, unter Verwendung zumindest eines Teils des ersten Produktgemischs ein zweites Einsatzgemisch, das zumindest Wasser, Kohlendioxid, Kohlenmonoxid, den zumindest einen Kohlenwasserstoff und Wasserstoff enthält, zu bilden, Mittel, die dafür eingerichtet sind, das zweite Einsatzgemisch einer Wassergas-Shift zu unterwerfen und mittels der Wassergas-Shift ein zweites Produktgemisch, das zumindest Wasser, Kohlendioxid, Kohlenmonoxid, den zumindest einen Kohlenwasserstoff und Wasserstoff enthält und gegenüber dem ersten Produktgemisch an Kohlendioxid und Wasserstoff angereichert und an Kohlenmonoxid und Wasser abgereichert ist, zu bilden, und Mittel, die dafür eingerichtet sind, zumindest ein Teil des zweiten Produktgemischs nach zumindest teilweiser Entfernung von Wasser einer Wasserstoffabtrennung zu unterwerfen und mittels der Wasserstoffabtrennung das Gasprodukt und ein Restgemisch, das zumindest Kohlendioxid, Kohlenmonoxid, Methan und Wasserstoff enthält, zu bilden, aufweist. Die Anlage zeichnet sich durch Mittel aus, die dafür eingerichtet sind, das zweite Einsatzgemisch unter Verwendung eines Teils des Restgemischs zu bilden.

Zu Merkmalen und Vorteilen einer entsprechenden Anlage, die vorteilhafterweise zur Durchführung eines Verfahrens eingerichtet ist, wie es zuvor unter Bezugnahme auf bevorzugte Ausgestaltungen erläutert wurde, ausdrücklich verwiesen.

Die Erfindung wird nachfolgend unter Bezugnahme auf die beigefügten Zeichnungen erläutert, die Ausführungsformen der Erfindung veranschaulichen.

### Kurze Beschreibung der Zeichnungen

Figur 1 zeigt ein Verfahren gemäß einer Ausführungsform der Erfindung in vereinfachter schematischer Darstellung.
Figur 2 zeigt ein Verfahren gemäß einer Ausführungsform der Erfindung in vereinfachter schematischer Darstellung.
Figur 3 zeigt ein Verfahren gemäß einer Ausführungsform der Erfindung in vereinfachter schematischer Darstellung.
Figur 4 zeigt ein Verfahren gemäß einer Ausführungsform der Erfindung in vereinfachter schematischer Darstellung.
Figur 5 zeigt ein Verfahren gemäß einer Ausführungsform der Erfindung in vereinfachter schematischer Darstellung.
Figur 6 zeigt ein Verfahren gemäß einer Ausführungsform der Erfindung in vereinfachter schematischer Darstellung.

### Ausführliche Beschreibung der Zeichnungen

In den Figuren sind einander baulich und/oder funktionell entsprechende Elemente, Stoffströme und dergleichen mit identischen Bezugszeichen angegeben und werden lediglich der Übersichtlichkeit halber nicht wiederholt erläutert. Die Verwendung identischer Bezugszeichen schließt insbesondere nicht aus, dass bestimmte Elemente unterschiedlich dimensioniert und bestimmte Stoffströme in unterschiedlichen Mengen vorliegen und unterschiedlich zusammengesetzt sein können.

Nachfolgend werden Ausgestaltungen erfindungsgemäßer Verfahren erläutert. Die entsprechenden Erläuterungen betreffen jedoch erfindungsgemäß ausgestaltete Anlagen in derselben Weise.

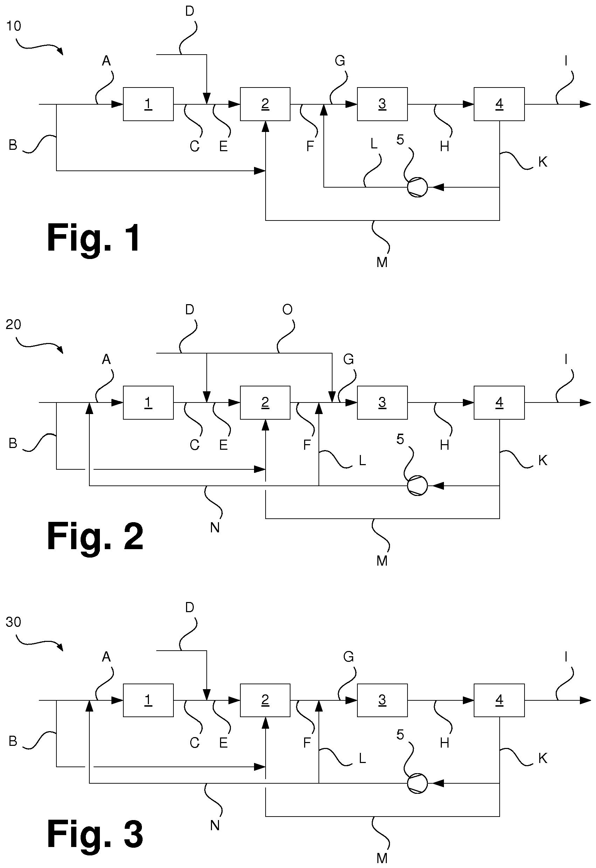

In Figur 1 ist ein Verfahren gemäß einer Ausführungsform der Erfindung schematisch veranschaulicht und insgesamt mit 10 bezeichnet.

In dem Verfahren 10 wird Erdgas A einer Entschwefelung 1 bekannter Art, beispielsweise einer Hydrodesulfurierung, unterworfen. Weiteres Erdgas B wird als Brenngas in einer Dampfreformierung 2 genutzt. Wie erwähnt, können anstelle von Erdgas auch andere Gasgemische eingesetzt werden, die insbesondere auch höhere Kohlenwasserstoffe aufweisen können. Zu Details sei auf die obigen Erläuterungen ausdrücklich verwiesen. In der Entschwefelung 1 entschwefeltes Erdgas C wird zusammen mit Dampf D bei der Bildung eines ersten Einsatzgemischs E verwendet, das zumindest Methan und Dampf enthält.

Das erste Einsatzgemisch E wird der Dampfreformierung 2 unterworfen. Mittels der Dampfreformierung 2 wird ein erstes Produktgemisch F gebildet, das zumindest Wasser, Kohlendioxid, Kohlenmonoxid, Methan und Wasserstoff enthält. Das erste Produktgemisch F wird bei der Bildung eines zweiten Einsatzgemischs G verwendet, das ebenfalls, jedoch ggf. in abweichenden Anteilen, zumindest Wasser, Kohlendioxid, Kohlenmonoxid, Methan und Wasserstoff enthält.

Das zweite Einsatzgemisch G wird einer Wassergas-Shift 3 unterworfen. Mittels der Wassergas-Shift 3 wird ein zweites Produktgemisch H gebildet, das zumindest Wasser, Kohlendioxid, Kohlenmonoxid, Methan und Wasserstoff enthält, und das gegenüber dem ersten Produktgemisch F insbesondere an Kohlendioxid und Wasserstoff an- und an Kohlenmonoxid und Wasser abgereichert ist.

Das zweite Produktgemisch H wird, beispielsweise kondensativ, von zumindest einem Teil des Wassers befreit, wie hier nicht gesondert veranschaulicht. Das zweite Produktgemisch H wird anschließend einer Wasserstoffabtrennung, beispielsweise einer Druckwechseladsorption 4, unterworfen. Mittels der Wasserstoffabtrennung 4 werden ein Gasprodukt I, das überwiegend oder ausschließlich Wasserstoff enthält, und ein Restgemisch K, das zumindest Kohlendioxid, Kohlenmonoxid, Methan und Wasserstoff enthält, gebildet.

Ein Anteil L des Restgemischs K wird im zuvor erläuterten Umfang mittels eines Verdichters 5 (im oben erläuterten Sinn) rückverdichtet und bei der Bildung des zweiten Einsatzgemischs G verwendet. Ein weiterer Anteil M des Restgemischs K wird ohne Verdichtung als Brenngas in der Dampfreformierung 2 eingesetzt.

In Figur 2 ist ein Verfahren gemäß einer weiteren Ausführungsform der Erfindung schematisch veranschaulicht und insgesamt mit 20 bezeichnet.

Das in Figur 2 dargestellte Verfahren 20 unterscheidet sich von dem in Figur 1 dargestellten Verfahren 10 dadurch, dass ein weiterer Anteil N des Restgemischs K in die Entschwefelung zurückgeführt wird, und dass weiterer Dampf O bei der Bildung des zweiten Einsatzgemischs H verwendet wird. Die Menge des Dampfs D kann dabei entsprechend angepasst werden. Es erfolgt also eine gezielte und separate Dampfzugabe stromauf der Wassergas-Shift 3.

In Figur 3 ist ein Verfahren gemäß einer weiteren Ausführungsform der Erfindung schematisch veranschaulicht und insgesamt mit 30 bezeichnet.

Das in Figur 3 dargestellte Verfahren 30 unterscheidet sich von dem in Figur 1 dargestellten Verfahren 10 durch die hier fehlende, bezüglich des Verfahrens 20 gemäß Figur 2 erläuterte separate Zugabe des Dampfs O.

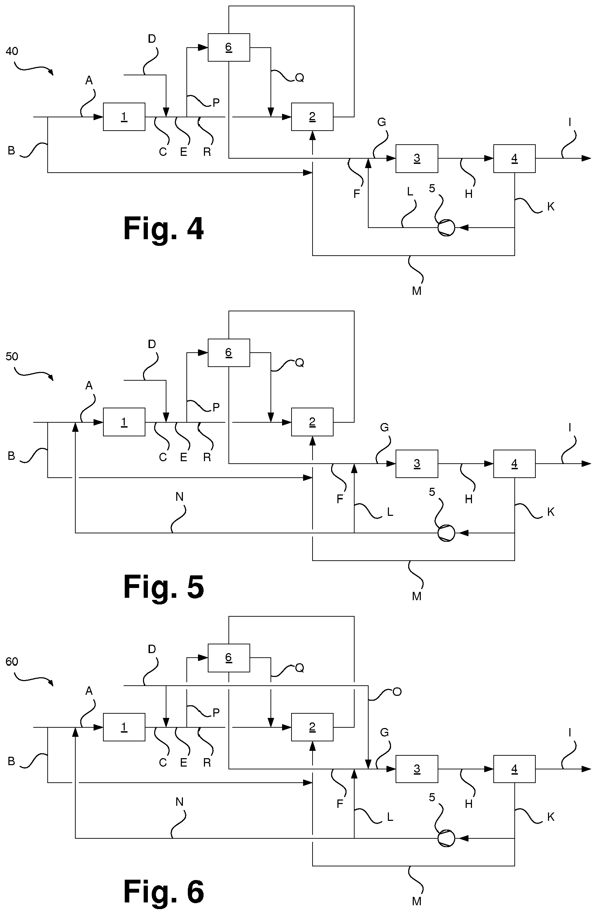

In Figur 4 ist ein Verfahren gemäß einer weiteren Ausführungsform der Erfindung schematisch veranschaulicht und insgesamt mit 40 bezeichnet.

Das in Figur 4 dargestellte Verfahren 40 unterscheidet sich von dem in Figur 1 dargestellten Verfahren 10 durch die zusätzliche Durchführung einer gasbeheizten Reformierung 6, der ein Anteil P des ersten Reaktionseinatzes E zugeführt wird. Ein in der gasbeheizten Reformierung 6 gebildetes Gasgemisch Q wird zusammen mit einem verbleibenden Anteil R des Reaktionseinsatzes E der Dampfreformierung 2 zugeführt. Das erste Produktgemisch F wird dabei lediglich zur Beheizung der gasbeheizten Reformierung 6 eingesetzt und nimmt nicht an den dortigen Reaktionen teil.

In Figur 5 ist ein Verfahren gemäß einer weiteren Ausführungsform der Erfindung schematisch veranschaulicht und insgesamt mit 50 bezeichnet.

Das in Figur 5 dargestellte Verfahren 50 umfasst die zu Verfahren 20 gemäß Figur 2 und Verfahren 40 gemäß Figur 4 erläuterten Aspekte, wobei hier jedoch keine separate Zugabe von Dampf O erfolgt.

In Figur 6 ist ein Verfahren gemäß einer weiteren Ausführungsform der Erfindung schematisch veranschaulicht und insgesamt mit 60 bezeichnet.

Das in Figur 6 dargestellte Verfahren 60 umfasst die zu Verfahren 30 gemäß Figur 3 und Verfahren 40 gemäß Figur 4 erläuterten Aspekte.

## Patentansprüche

1. Verfahren (10-60) zur Herstellung eines Gasprodukts (I), das überwiegend oder ausschließlich Wasserstoff enthält, wobei ein erstes Einsatzgemisch (E), das zumindest einen Kohlenwasserstoff und Wasser enthält, gebildet wird, wobei das erste Einsatzgemisch (E) einer Dampfreformierung (2) unterworfen wird, wobei mittels der Dampfreformierung (2) ein erstes Produktgemisch (F), das zumindest Wasser, Kohlendioxid, Kohlenmonoxid, den zumindest einen Kohlenwasserstoff und Wasserstoff enthält, gebildet wird, wobei unter Verwendung zumindest eines Teils des ersten Produktgemischs (F) ein zweites Einsatzgemisch (G), das zumindest Wasser, Kohlendioxid, Kohlenmonoxid, den zumindest einen Kohlenwasserstoff und Wasserstoff enthält, gebildet wird, wobei das zweite Einsatzgemisch (G) einer Wassergas-Shift (3) unterworfen wird, wobei mittels der Wassergas-Shift (3) ein zweites Produktgemisch (H), das zumindest Wasser, Kohlendioxid, Kohlenmonoxid, den zumindest einen Kohlenwasserstoff und Wasserstoff enthält und gegenüber dem ersten Produktgemisch (F) an Kohlendioxid und Wasserstoff angereichert und an Kohlenmonoxid und Wasser abgereichert ist, gebildet wird, wobei zumindest ein Teil des zweiten Produktgemischs (H) nach zumindest teilweiser Entfernung von Wasser einer Wasserstoffabtrennung (4) unterworfen wird, und wobei mittels der Wasserstoffabtrennung (4) das Gasprodukt (I) und ein Restgemisch (K), das zumindest Kohlendioxid, Kohlenmonoxid, den zumindest einen Kohlenwasserstoff und Wasserstoff enthält, gebildet werden, **dadurch gekennzeichnet, dass** das zweite Einsatzgemisch (G) unter Verwendung eines Teils (L) des Restgemischs gebildet wird.

2. Verfahren nach Anspruch 1, bei dem der Teil (L) des Restgemischs (K), der bei der Bildung des zweiten Einsatzgemischs (G) verwendet wird, einen Mengenanteil von 10% bis 80% des Restgemischs (K) umfasst.

3. Verfahren nach Anspruch 1 oder 2, bei dem ein weiterer Anteil (M) des Restgemischs (K) als Brenngas in der Dampfreformierung (2) eingesetzt wird.

4. Verfahren nach einem der vorstehenden Ansprüche, bei dem die Bereitstellung des ersten Einsatzgemischs die eine Entschwefelung (1) umfasst, der schwefelhaltiges Erdgas (A) zugeführt wird, wobei ein weiterer Anteil (N) des Restgemischs (K) der Entschwefelung (1) zugeführt wird.

5. Verfahren nach einem der vorstehenden Ansprüche, bei der bei der Bildung des ersten Einsatzgemischs (E) eine Zugabe von Dampf (D) umfasst, und bei der die Bildung des zweiten Einsatzgemischs (G) ohne weitere Dampfzugabe erfolgt.

6. Verfahren nach einem der Ansprüche 1 bis 4, bei der bei der Bildung des ersten Einsatzgemischs (E) eine Dampfzugabe umfasst, und bei der die Bildung des zweiten Einsatzgemischs (G) eine separate Dampfzugabe (O) umfasst.

7. Verfahren nach einem der vorstehenden Ansprüche, bei dem eine gasbeheizte Reformierung (6) durchgeführt wird, die unter Verwendung zumindest einem Teil des ersten Produktgemischs (F) beheizt wird.

8. Verfahren nach einem der vorstehenden Ansprüche, bei dem die Wasserstoffabtrennung (4) mit einem Eingangsdruckniveau von 10 bis 35 bar und mit einem Ausgangsdruckniveau von 20 bis 30 bar durchgeführt wird, wobei das Gasprodukt (I) auf dem Eingangsdruckniveau und das Restgemisch (K) auf dem Ausgangsdruckniveau bereitgestellt werden.

9. Verfahren nach Anspruch 8, bei dem zumindest die Wassergas-Shift (3) auf einem Betriebsdruckniveau, das oberhalb des Desorptionsdruckniveaus liegt, durchgeführt wird, und bei dem der Teil (L) des Restgemischs (K), der bei der Bildung des zweiten Einsatzgemischs (G) verwendet wird, auf dieses Betriebsdruckniveau verdichtet wird.

10. Verfahren nach Anspruch 9, bei dem das Betriebsdruckniveau der Wassergas-Shift (3) bei 10 bis 35 bar liegt.

11. Verfahren nach Anspruch 9 oder 10, bei dem die Dampfreformierung (2) auf einem Druckniveau durchgeführt wird, das zumindest bei dem Betriebsdruckniveau der Wassergas-Shift (3) liegt.

12. Anlage zur Herstellung eines Gasprodukts (I), das überwiegend oder ausschließlich Wasserstoff enthält, wobei die Anlage Mittel, die dafür eingerichtet sind, ein erstes Einsatzgemisch (E), das zumindest einen Kohlenwasserstoff und Wasser enthält, zu bilden, Mittel, die dafür eingerichtet sind, das erste Einsatzgemisch (E) einer Dampfreformierung (2) zu unterwerfen und mittels der Dampfreformierung (2) ein erstes Produktgemisch (F), das zumindest Wasser, Kohlendioxid, Kohlenmonoxid, den zumindest einen Kohlenwasserstoff und Wasserstoff enthält, zu bilden, Mittel, die dafür eingerichtet sind, unter Verwendung zumindest eines Teils des ersten Produktgemischs (F) ein zweites Einsatzgemisch (G), das zumindest Wasser, Kohlendioxid, Kohlenmonoxid, den zumindest einen Kohlenwasserstoff und Wasserstoff enthält, zu bilden, Mittel, die dafür eingerichtet sind, das zweite Einsatzgemisch (G) einer Wassergas-Shift (3) zu unterwerfen und mittels der Wassergas-Shift (3) ein zweites Produktgemisch (H), das zumindest Wasser, Kohlendioxid, Kohlenmonoxid, den zumindest einen Kohlenwasserstoff und Wasserstoff enthält und gegenüber dem ersten Produktgemisch (F) an Kohlendioxid und Wasserstoff angereichert und an Kohlenmonoxid und Wasser abgereichert ist, zu bilden, und Mittel, die dafür eingerichtet sind, zumindest ein Teil des zweiten Produktgemischs (H) nach zumindest teilweiser Entfernung von Wasser einer Wasserstoffabtrennung (4) zu unterwerfen und mittels der Wasserstoffabtrennung (4) das Gasprodukt (I) und ein Restgemisch (K), das zumindest Kohlendioxid, Kohlenmonoxid, Methan und Wasserstoff enthält, zu bilden, aufweist, **gekennzeichnet durch** Mittel, die dafür eingerichtet sind, das zweite Einsatzgemisch (G) unter Verwendung eines Teils (L) des Restgemischs zu bilden.

13. Anlage nach Anspruch 12, die zur Durchführung eines Verfahrens nach einem der Ansprüche 1 bis 12 eingerichtet ist.
